# EUROPEAN PATENT APPLICATION

(11) **EP 4 624 089 A1**
(43) Date of publication of application: **01.10.2025**
(21) Application number: 25165262.4
(22) Date of filing: 21.03.2025
(51) Int. Cl.: B23K 35/02

(54) **CONSUMABLE ELECTRODE FOR SHIELDED METAL ARC WELDING**

(30) Priority: 25.03.2024 US 202418615259
(71) Applicant: Lincoln Global, Inc., Cleveland, OH 44117 (US)
(72) Inventor: DEPIETRO, Samantha, 44086 Thompson (US); ZALOKAR, Joseph Kenneth, 44060 Mentor (US); MORALES, Jeffrey, 44052 Lorain (US); PIKE, James, 44060 Mentor (US); ARNOULT, Olivier, 44122 Shaker Heights (US); HANSEN, Steven, 44143 Richmond Heights (US); SATIN, Morris, 44120 Shaker Heights (US); VOORHEES, Gregory, 44120 Shaker Heights (US); LESLIE, Eric, 44024 Chardon (US)
(74) Representative: Hoyng Rokh Monegier B.V.

(57) **Abstract**

The disclosed technology generally relates to welding technologies and more particularly to electrodes for shielded metal arc welding. In one aspect, a welding electrode comprises an electrode core and a coating formed around the electrode core. The electrode core has a centerline axis that extends along its length and comprises an electrode core body and an electrode core tip. The electrode core body has a circular cross-section having a radius. The electrode core tip has two or more recessed portions and two or more unrecessed portions. The two or more recessed portions extend along a length of the electrode core tip and a radial distance between the centerline axis and a surface of one of the recessed portions is less than a length of the radius. The coating comprises a flux material.

## Description

### BACKGROUND

### Field

The disclosed technology generally relates to welding technologies and more particularly to consumable electrodes for arc welding, e.g., shielded metal arc welding.

### Description of the Related Art

Various welding technologies utilize welding wires that serve as a source of metal. For example, in metal arc welding, an electric arc is created when a voltage is applied between a consumable weld electrode wire, which serves as one electrode that advances towards a workpiece, and the workpiece, which serves as another electrode. The arc melts a tip of the metal wire, thereby producing droplets of the molten metal wire that deposit onto the workpiece to form a weldment or weld bead.

Technological and economic demands on welding technologies continue to grow in complexity. For example, the need for higher bead quality in both appearance and in mechanical properties continues to grow, including high yield strength, ductility, and fracture toughness. Simultaneously, the higher bead quality is often demanded while maintaining economic feasibility. Some welding technologies aim to address these competing demands by improving the consumables, e.g. by improving the physical designs and/or compositions of the electrode wires.

Shielded metal arc welding (SMAW), which may also be referred to as manual metal arc welding, flux shielded welding, and stick welding, is a versatile and simple technique that is widely used in commercial welding operations.

### SUMMARY

In an aspect, a welding electrode comprises an electrode core and a coating formed around the electrode core. The electrode core has a centerline axis that extends along its length and comprises an electrode core body and an electrode core tip. The electrode core body has a circular cross-section having a radius. The electrode core tip has two or more recessed portions and two or more unrecessed portions. The two or more recessed portions extend along a length of the electrode core tip and a radial distance between the centerline axis and a surface of one of the recessed portions is less than a length of the radius. The coating comprises a flux material.

In another aspect, a welding electrode comprises an electrode core and a coating formed around the electrode core. The electrode core has a centerline axis that extends along a length of the electrode core comprises an electrode core body and an electrode core tip. The electrode core tip comprises first and second recessed portions and an unrecessed portion. The unrecessed portion is between the first and second recessed portions and a first radial distance from a point on the centerline axis to a surface of the unrecessed portions is greater than a second radial distance from the point on the centerline axis to a surface of the first recessed portion. The coating comprises a flux material.

In another aspect, a consumable welding electrode comprises an electrode core body having opposing first and second ends, an electrode core tip at the first end, and a coating formed around the electrode core body and the electrode core tip. The electrode core tip comprises a plurality of recessed portions extending along the length of the electrode core tip. The coating comprises a flux material and the coating at least partially fills cavities defined by each of the plurality of recessed portions.

### BRIEF DESCRIPTION OF THE DRAWINGS

Figure 1A schematically illustrates a shielded metal arc welding (SMAW) system according to embodiments of the present technology.
Figure 1B illustrates a perspective view of a perspective view of a consumable welding electrode for SMAW.
Figure 2A illustrates a perspective view of a conventional electrode core for SMAW.
Figure 2B illustrates an isometric end view of an electrode having the electrode core of Figure 2A.
Figure 3A illustrates a perspective view of a conventional electrode core for SMAW that includes a tapered electrode core tip.
Figure 3B illustrates an isometric end view of an electrode having the electrode core of Figure 3A.
Figure 4A illustrates a perspective view of an electrode core for SMAW that has three recessed portions, according to embodiments of the present technology.
Figure 4B illustrates an isometric end view of an electrode having the electrode core of Figure 4A.
Figure 4C illustrates a cross-sectional view of the electrode of Figure 4B.
Figure 5A illustrates a perspective view of an electrode core for SMAW that has two recessed portions, according to embodiments of the present technology.
Figure 5B illustrates an end view of an electrode having the electrode core of Figure 5A.
Figure 6A illustrates a perspective view of an electrode core for SMAW that has four recessed portions, according to embodiments of the present technology.
Figure 6B illustrates an end view of an electrode having the electrode core of Figure 6A.
Figure 7A illustrates a perspective view of an electrode core for SMAW that has five recessed portions, according to embodiments of the present technology.
Figure 7B illustrates an end view of an electrode having the electrode core of Figure 7A.
Figure 8A illustrates a perspective view of an electrode core for SMAW that has six recessed portions, according to embodiments of the present technology.
Figure 8B illustrates an end view of an electrode having the electrode core of Figure 8A.
Figure 9A illustrates a perspective view of an electrode core for SMAW that has a tapered electrode core tip that includes two recessed portions, according to embodiments of the present technology.
Figure 9B illustrates an end view of an electrode having the electrode core of Figure 9A.
Figure 9C illustrates a cross-sectional view of the electrode shown in Figure 9B taken along line C-C and showing the unrecessed portions of the electrode core tip.
Figure 9D illustrates a cross-sectional view of the electrode shown in Figure 9B taken along line D-D and showing the recessed portions of the electrode core tip.
Figure 9E illustrates an alternative cross-sectional view of the electrode shown in Figure 9B to the cross-sectional view shown in Figure 9D.

### DETAILED DESCRIPTION

In processes using a consumable electrode, the electrode or the wire melts to provide an additive metal that fills a gap to form a weld joint that joins two metal workpieces. The welding processes using consumable electrodes include shielded metal arc welding (SMAW), gas metal arc welding (GMAW) or metal inert gas (MIG) welding, flux-cored arc welding (FCAW), metal-cored arc welding (MCAW), and submerged arc welding (SAW), among others.

### Shielded Metal Arc Welding

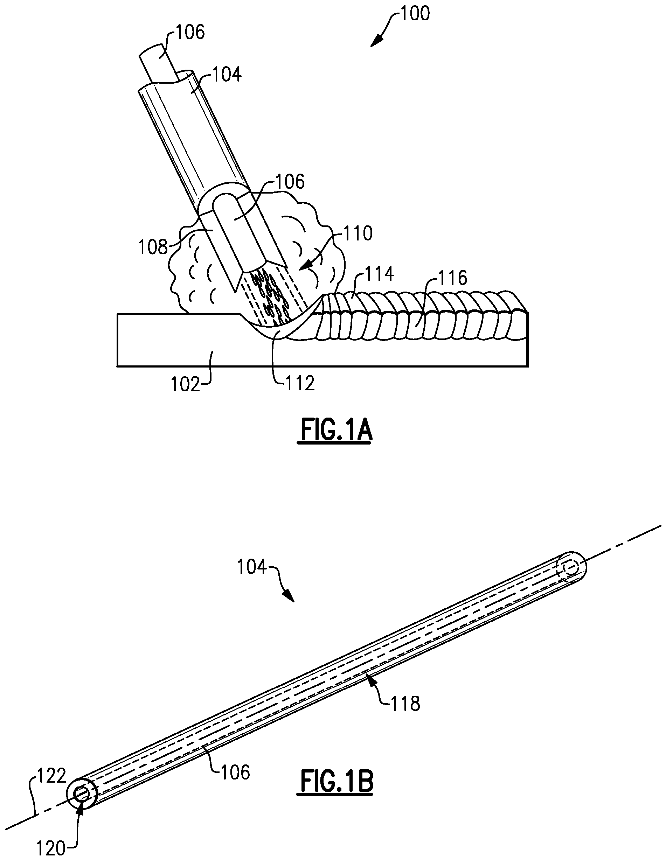

Figure 1A schematically illustrates a shielded metal arc welding (SMAW) system 100 for depositing filler or weld metal onto a workpiece 102. The system 100 includes a consumable welding electrode 104 having an electrode core 106 and a coating 108. The electrode core 106 generally comprises a metal or alloy while the coating 108 comprises flux, which is a granular fusible material. During a SMAW operation, an electric current from a welding power supply is applied to the electrode core 106. When the electrode 104 is positioned close to the workpiece 102, the provided current arcs to the workpiece 102. The arc 110 heats the workpiece 102 and the electrode 104, causing the metallic electrode core 106 and workpiece 102 to melt, thereby forming a pool 112 of molten metal on the workpiece 102. The heat given off by the arc 110 also causes the flux material in the coating 108 to disintegrate and vaporize, thereby forming a shielding gas that protects the weld area from atmospheric gases during the welding process. Some of the flux material can also mix with the molten metal in the weld pool 112 to form a molten slag. The molten slag, which is typically less dense than the weld metal, floats to the surface of the weld metal and solidifies to form a layer of slag 114 over the cooling weld metal 116. The solidified slag layer 114 can protect the weld metal 116 from contamination as the weld metal 116 cools.

Figure 1B depicts a perspective view of the consumable welding electrode 104. The electrode core 106 has an electrode core body 118 and an electrode core tip 120 that extend along a centerline axis 122 of the electrode 104. The electrode core body 118 typically has a cylindrical shape and the electrode 104 typically has a length of 12 to 24 inches. The coating 108 is formed around the electrode core 106 using an extrusion process whereby the electrode core 106 is pushed through an extruder and the coating material 108 coats the surfaces of the electrode core body 118 and the electrode core tip 120.

When initiating a weld using electrode 104, electrode 104 is positioned such that the electrode core tip 120 is adjacent to the workpiece 102. Once the arc is established and welding begins, the electrode core tip 120 (and the portion of the coating 108 formed over the electrode core tip 120) melts away and welding proceeds using the rest of the electrode 104 (e.g., the electrode core body 118 and the rest of the coating 108). The electrode core tip 120 is typically less than one inch long and melts away within the first few seconds of welding. However, it can be difficult to establish an arc with some electrodes and weld metal formed during the arc-start process can be poor quality (e.g., have high porosity). Accordingly, there is a desire and need to improve the arc-start characteristics of the SMAW electrodes. For example, there is a need for SMAW electrodes that can have high current density and a high coating-to-metal ratio at the electrode core tip, which can reduce weld metal porosity and make it easier to establish an arc at the start of welding, while also having high coating durability at the tip and that can be easily manufactured.

### Cylindrical and Tapered Electrode Core Tip Designs for SMAW

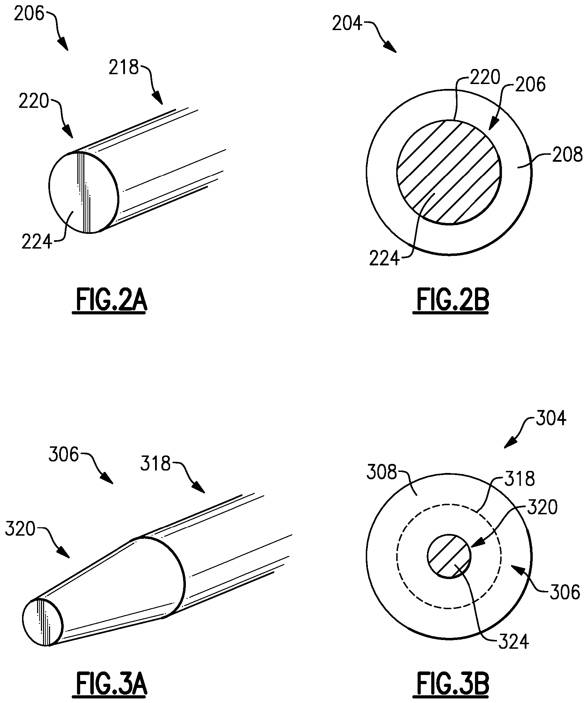

Figure 2A illustrates a perspective view of an electrode core 206 having an electrode core body 218 and electrode core tip 220 and Figure 2B is an isometric end view of an electrode 204 having the electrode core 206. The electrode core tip 220 has a generally circular end surface 224 and a generally cylindrical shape that does not taper along the length of the electrode core tip 220 such that a radius of the circular end surface 224 is approximately the same length as the radius of the circular cross-section of the electrode core body 218.

During the extrusion process where the flux-containing coating is formed around the electrode core, the density of a given portion of the coating can depend on the shape and structure of the underlying portion of the electrode core that the portion coating is formed on. In the embodiment shown in Figures 2A and 2B, the electrode core body 218 and the electrode core tip 220 have approximately the same shape and structure. Accordingly, the density of the coating 208 can be approximately constant along the length of the electrode 204 such that the density of a portion 226 of the coating 208 that surrounds the electrode core tip 220 can be approximately equal to the density of a portion 228 of the coating 208 that surrounds the electrode core body 218.

The uniform profile of the electrode core 206 means that the electrode 204 can be easily manufactured. However, electrode 204 can have poor arc-start characteristics because current density at the end surface 224 is not high enough to reliably and consistently initiate an arc. One way to increase the current density at the end surface is to reduce the area of the end surface by tapering the electrode core tip. Figure 3A illustrates a perspective view of an electrode core 306 that includes an electrode core tip 320 having tapered surfaces and Figure 3B is an isometric end view of an electrode 304 that comprises the electrode core 306. The electrode core tip 320 tapers inwards towards the centerline axis 322 along the length of the electrode core tip 320. In the embodiment illustrated in Figures 3A and 3B, the electrode core tip 320 tapers at an equal rate such that the end surface 324 is generally circular. Because of the tapered shaped, the cross-sectional area of the electrode core tip 320 decreases along the length of the electrode core tip 320 and the area of the end surface 324 is significantly less than a cross-sectional area of the electrode core body 318. With this structure, the current density at the end surface 324 is greater than the current density within the electrode core body 318. This increased current density makes it easier to establish an arc with the electrode 304 than it is with the electrode 204.

The tapered structure of the electrode core tip 320 can also affect the durability of the coating 308. The tapered structure means that there is a significant decrease in the volume electrode core at the electrode core tip 320. During the coating extrusion process, the coating material is provided at a relatively constant rate, meaning that approximately the same amount of the coating material is flown over the electrode core tip 320 as is flown over a section of the electrode core body 318 having the same length as the electrode core tip 320. Accordingly, the coating-to-metal ratio at the electrode core tip 320 is greater than the coating-to-metal ratio of the electrode core body 318. The increased coating-to-metal ratio at the electrode core tip 320 allows for more of the shielding gas to be generated at the start of welding, which reduces the porosity of the weld metal formed from the electrode core tip 320. The additional coating material also results in additional flux material mixing with the weld metal, which provides further protection to the weld metal and improves the quality of the weld metal formed from the electrode core tip 320.

While electrodes having a tapered electrode core tip can have better arc-start characteristics than electrodes having cylindrical electrode core tips, the tapered shape can also increase the fragility of the coating 308 at the tip. Because the coating material is flown over the electrode core at a relatively constant rate, the tapered electrode core tip results in there being less of the coating 308 at the electrode core tip than at the electrode core body. In other words, the portion of the coating 308 formed around the tapered electrode core tip can have a lower density than the portion 308 of the coating formed around electrode core body. The lower coating density decreases the durability of the electrode because the less-dense coating 308 is more prone to chipping off the electrode core tip (e.g., during shipping and handling of the electrode). Additionally, the tapered electrode core tip 320 has significantly less surface area for the coating material to adhere to than the cylindrical electrode core tip 220 has, which can also make the coating material more prone to chipping. Electrodes having chipped off coating at the electrode core tip may have poor arc-start characteristics and may not even be usable for welding.

The tapered shape of the electrode core tip can also cause challenges and delays during manufacturing. During the extrusion process, multiple electrode cores are aligned tip-to-tail and the tip of one electrode pushes on the back end of the electrode in front of it. With this arrangement, the electrodes push each other through the extruder. However, the tapered electrode core tip can become misaligned with the electrode in front of it, which can cause the extrusion process to jam.

Accordingly, there is a need for a SMAW electrode having improved arc-start characteristics while having improved durability and manufacturability.

### Recessed Electrode Core Tip Designs for SMAW

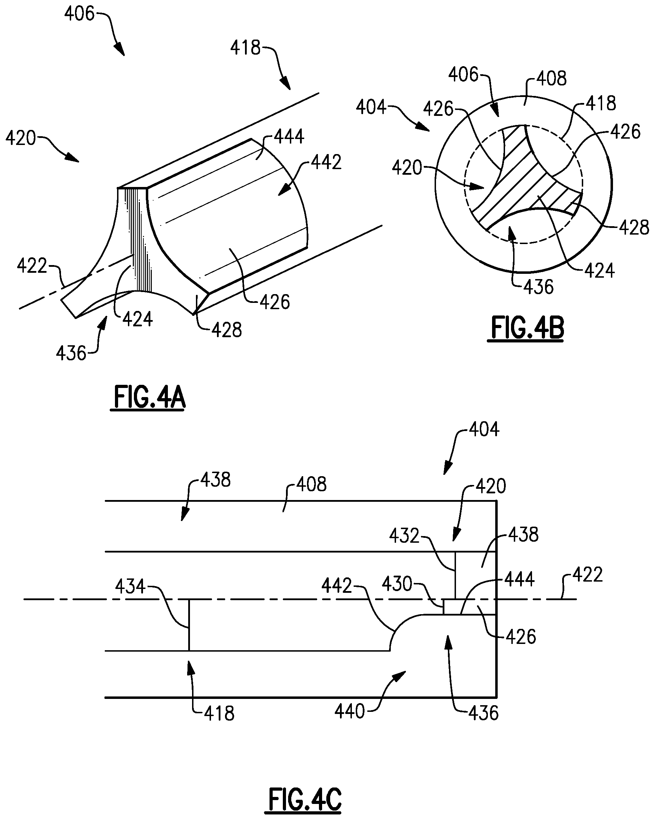

To improve the arc-start characteristics of the SMAW electrode while maintaining the durability of the flux coating and ease of manufacturing, the electrode core tip can have recessed portions that extend along the length of the electrode core tip. Figure 4A illustrates a perspective view of an electrode core 406 that includes an electrode core tip 420 having recessed portions 426 and unrecessed portions 428, Figure 4B is an isometric end view of an electrode 404 having an electrode core 406 that has the electrode core tip 420, and Figure 4C is a cross-sectional view of the electrode 404. The dashed lines depicted in Figure 4B represent the circumference of the electrode core body 418. The recessed portions 426 and unrecessed portions 428 are alternatingly arranged around the exterior of the electrode core tip 420 and the recessed portions 426 extend along the length of the electrode core tip 420. In some embodiments, the recessed portions 426 are evenly spaced around the exterior of the electrode core tip 420.

The recessed portions 426 extend inwards toward the centerline axis 422 such that the surfaces of the recessed portions 426 are closer to the centerline axis than surfaces of the unrecessed portions 428. In some embodiments, the recessed portions 426 do not intersect with the centerline axis 426. As best shown in Figure 4C, the surface of the recessed portion 426 is spaced apart from the centerline axis 422 by a radial distance 430 while the surface of unrecessed portions 428 is spaced apart from the centerline axis 422 by a radial distance 432. As used herein, the term "radial distance" describes the length of a line segment between the centerline axis and a point on the surface of the electrode core body 420 and that is perpendicular to the centerline axis of the electrode. The radial distance 430 is less than the radial distance 432. In some embodiments, the radial distance 430 can be less than half the radial distance 432. The surface of the recessed portion 426 is also closer to the centerline axis 422 than the surface of the electrode core body 418. For example, the electrode core body 418, which can have a circular cross-section, has a radius 434 that is greater than the radial distance 430. In some embodiments, the radial distance 430 can be less than half length of the radius 434. In some embodiments, the radial distance 432 can be approximately the same length as the radius 434.

With this arrangement, the area of the end surface 424 is significantly less than a cross-sectional area of the electrode core body 418. For example, in some embodiments, the area of the end surface 424 is approximately 50% of the cross-sectional area of the electrode core body 418 that is parallel to the end surface 424. In other embodiments, the area of the end surface 422 is smaller than the cross-sectional-area of the electrode core body 418 by a different amount. For example, in some embodiments, the area of the end surface 422 is 30% to 80% of cross-sectional area of the electrode core body 418, is 30% to 50% of cross-sectional area of the electrode core body 418, is 50% to 80% of cross-sectional area of the electrode core body 418, is 40% to 60% of cross-sectional area of the electrode core body 418, or a value in a range defined by any of these values. In some embodiments, the cross-sectional area of the electrode core tip 420 is approximately the same as the area of the end surface 424. Accordingly, in some embodiments, the cross-sectional area of the electrode core tip 420 can also be significantly less than the cross-sectional area of the electrode core body 418. The reduced area of the end surface 424 means that the current density at the end surface 424 during the arc-start process is greater than the current density within the electrode core body 418 (during the arc-start process or during steady-state welding processes), which improves the arc-start characteristics of the electrode core tip 420.

While the cross-sectional area of the electrode core tip 420 can be significantly less than the cross-sectional area of the electrode core body 418, the cross-sectional perimeter of the electrode core tip 420 can be about the same as the cross-sectional perimeter of the electrode core body 418. Accordingly, in some embodiments, the cross-sectional perimeter of the electrode core-tip 420 can be approximately 100% of the cross-sectional perimeter of the electrode core body 418. In other embodiments, the cross-sectional perimeter of the electrode core tip 418 can be slightly smaller or slightly larger than the cross-sectional perimeter electrode core body 418. For example in some embodiments, the cross-sectional perimeter of the electrode core tip 420 is within 20% of the cross-sectional perimeter of the electrode core body such that cross-sectional perimeter of the electrode core tip is between 80% and 120% of the cross-sectional perimeter of the electrode core body 418, between 80% and 100% of the cross-sectional perimeter of the electrode core body 418, between 100% and 120% of the cross-sectional perimeter of the electrode core body 418, between 90% and 110% of the cross-sectional perimeter of the electrode core body 418, between 90% and 100% of the cross-sectional perimeter of the electrode core body 418, between 100% and 110% of the cross-sectional perimeter of the electrode core body 418, between 95% and 105% of the cross-sectional perimeter of the electrode core body 418, between 95% and 100% of the cross-sectional perimeter of the electrode core body 418, between 100% and 105% of the cross-sectional perimeter of the electrode core body 418, or a value in a range defined by any of these ranges.

Because the electrode core tip 420 has a cross-sectional perimeter that is generally similar in size to the cross-sectional perimeter of the electrode core body 418, the cross-sectional perimeter of the electrode core tip 420 is significantly higher than the cross-sectional perimeter of a tapered electrode core tip that does not have recessed portions (e.g., electrode core tip 320). The higher cross-sectional perimeter of the electrode core tip 420 means that the electrode core tip 420 also has a higher surface area than the tapered electrode core tips that do not have recessed portions. With this arrangement, the coating 408 formed on the electrode core 402 can have improved durability compared to electrodes having electrode cores with tapered tips that do not have recessed portions. The recessed portions 426 define cavities 436 and, during the coating extrusion process, the coating material flows around the electrode core 402 and fills cavities 436. The coating material adheres to the surface of the electrode core 402, including the surfaces of the cavities 436. The increased surface area of the electrode core tip 420 (compared to the surface area of the tapered electrode core tips that do not have recessed portions) means that more of the coating material is directly adhered to the electrode tip 420, which results in the coating 408 being more strongly adhered to the electrode core tip 420, thereby improving the strength of the coating 408 and making it less prone to chipping. Additionally, without being limited by theory, it is believed that the increased cross-sectional perimeter of the electrode core tip 420 means that the coating does not go through as drastic a density change between the electrode core body 418 and the electrode core tip 420. In other words, the difference between the density of the portion 438 of the coating 408 that surrounds the electrode core body 418 and the density of the portion 440 of the coating that surrounds the electrode core tip 420 can be relatively small. This reduced density difference means that the durability of the portion 440 of the coating 408 is improved and the coating 440 is therefore less prone to chipping.

Electrodes having the electrode core tip 420 can also be easier to manufacture than electrodes having tapered tips without recessed portions. The shape and increased area of the end surface 424 of the electrode core tip 420 makes it harder for the electrode core tip 420 to slip past the end surface of the electrode core in front of it, which means that the electrode core 402 is less likely to become misaligned with the electrode in front of it and cause a jam in the extruder.

In some embodiments, the recessed portions 426 are formed using a machining process that uses one or more bits (e.g., milling bits) to remove portions of the electrode core 406 from the electrode core tip 420. As shown in Figures 4A-4C, this milling process can result in the recessed portions 426 having a transition section 442 and a flat section 444, where the size and shape of the transition section 442 can depend on the size and type of milling bits used to form the recessed portions 426. For example, in the embodiments shown in Figures 4A-4C, the transition section 442 is curved and the radius of the curve can be based on a dimension of the milling bit used to form the recessed portion 426. In some embodiments, the transition section 442 can have a different shape. In still other embodiments, the recessed portion may not have a transition section at all. In these embodiments, the transition from the electrode core body 418 and the recessed portion 426 of the electrode core tip 420 can be abrupt and discontinuous.

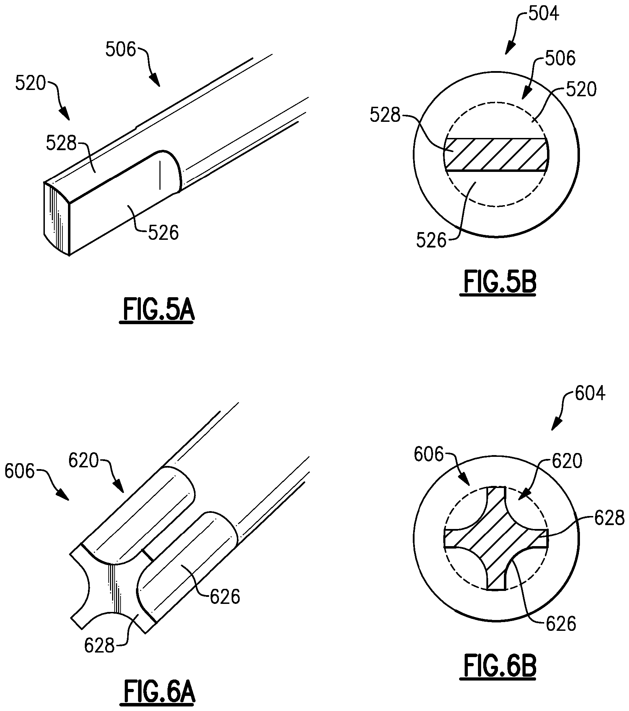

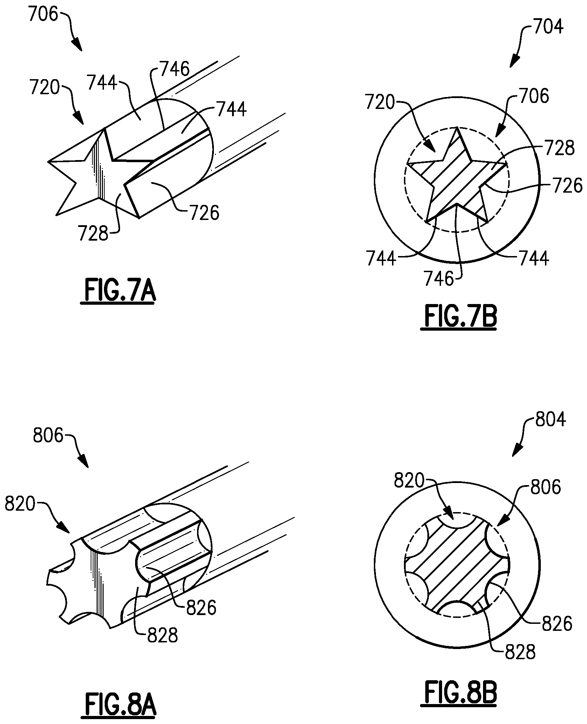

In the embodiment illustrated in Figures 4A-4C, the electrode core tip 420 has three recessed portions 426 and three unrecessed portions 428. In other embodiments, however, the electrode core tip can have a different number of recessed portions. For example, Figure 5A illustrates an electrode core 506 that includes an electrode core tip 520 having two recessed portions 526 and two unrecessed portions 528 and Figure 5B illustrates an electrode 504 having the electrode core 506. Figure 6A illustrates an electrode core 606 that includes an electrode core tip 620 having four recessed portions 626 and four unrecessed portions 628 and Figure 6B illustrates an electrode 604 having the electrode core 606. Figure 7A illustrates an electrode core 706 that includes an electrode core tip 720 having five recessed portions 726 and five unrecessed portions 728 and Figure 7B illustrates an electrode 704 having the electrode core 706. Figure 8A illustrates an electrode core tip 820 having six recessed portions 826 and six unrecessed portions 828 and Figure 8B illustrates an electrode 804 having an electrode core 806 that includes the electrode core tip 820. In each of the embodiments shown in Figures 5A-8B, the recessed portions and unrecessed portions are alternatingly arranged around the exterior of the electrode core tip and the recessed portions extend along the length of the electrode core tip. The recessed portions extend inwards toward the centerline axis such that a radial distance between the surface of the recessed portion and the centerline axis is less than the radial distance between the surface of the unrecessed portion and the centerline axis. The end surface of each of the electrodes core tips shown in Figures 5A-8B has a generally flat shape and the area of the end surfaces are each significantly less than the cross-sectional area of the respective electrode core bodies. In some embodiments, the cross-sectional-area of the electrode core tips is approximately the same as the area of the corresponding end surfaces and can be significantly less than the cross-sectional areas of the corresponding electrode core bodies. However, the cross-sectional perimeter of each of the electrode core tips can be about the same as, or only slightly smaller or larger than, the cross-sectional perimeter of the corresponding electrode core body. With this arrangement, the cross-sectional perimeter of each of the electrode core tips is significantly higher than the cross-sectional perimeter of a tapered electrode core tip that does not have recessed portions, which means that each of the electrode core tips depicted in Figures 5A-8B has more surface area for the coating to adhere to, resulting in the coating having improved durability. The increased cross-sectional perimeters also mean that the density change between the electrode core body and the electrode core tip during the coating extrusion process is reduced, which improves the durability of the coating around the electrode core tips, making the coating less prone to chipping.

In the embodiments illustrated in Figures 4A-4C, 6A, 6B, 8A, and 8B, the recessed portions have a smooth, curved shape such that there are no seams or edges within the recessed portions. In some embodiments, however, the recessed portions can have a jagged, geometric shape that includes one or more edges. For example, in the embodiment shown in Figures 7A and 7B, the recessed portions 728 are each formed from two planar segments 744 that intersect at the bottom of the recessed portion 728 and form an edge 746. In other embodiments, the recessed portions can have a different shape. For example, in some embodiments, the recessed portions can be formed from more than two planar segments and can have more than one edge (e.g., three planar segments and two edges).

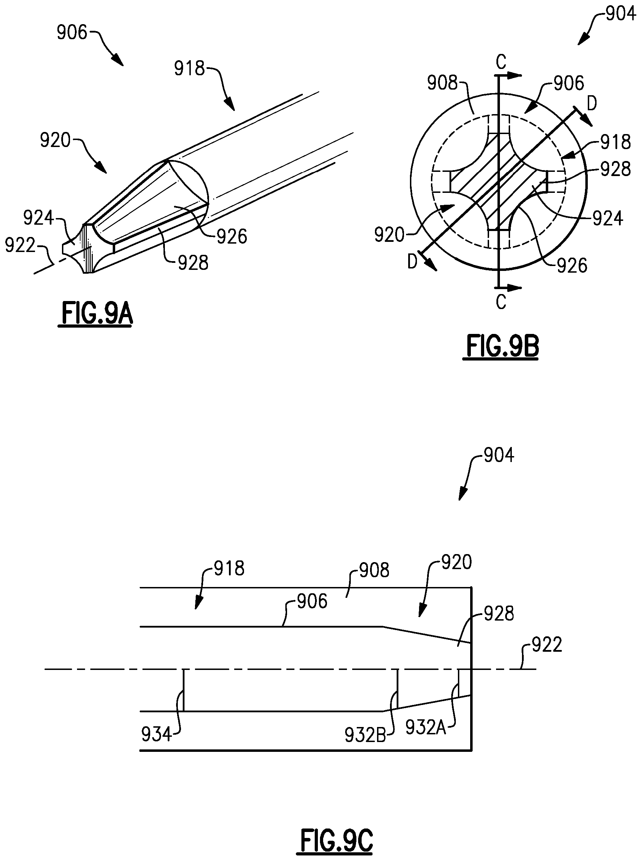

In the embodiments illustrated in Figures 4A-8B, the electrode core tips are not tapered along their length. Accordingly, the radial distance to the surface of the unrecessed portions remains constant along the length of the electrode core tips and this radial distance is approximately equal to the length of the radius of the electrode core body. Similarly, in the embodiments shown in Figures 4A-8B, the radial distance to the surface of the recessed portions remains constant along the length of the electrode core tip (except for a transition section of the recessed portions, if present). In other embodiments, however, the electrode core tips can be tapered along the length of the electrode core tip. For example, Figure 9A illustrates a perspective view of a tapered electrode core 906 that includes a tapered electrode core tip 920 having recessed portions 926 and unrecessed portions 928 and Figured 9B illustrates an isometric end view of an electrode 904 that includes the electrode core 906. The electrode core tip 920 tapers inwards toward the centerline axis 922 along the length of the electrode core tip 920. Because of the tapered shape, the cross-sectional area and cross-sectional perimeter of the electrode core tip 920 decreases along the length of the electrode core tip 920 and the area of the end surface 924 is significantly less than a cross-sectional area of the electrode core body 918.

The tapered shape of the electrode core tip 920 means that the radial distance between the centerline axis 922 and the surface of the unrecessed portions 928 can vary along the length of the electrode core tip 920. Figure 9C is a cross-sectional view of electrode 904 taken along line C-C showing the tapered electrode core tip 920. The tapered shape of the electrode core tip 920 means that the radial distance 932A (and radial distance 932B) between a point on the centerline axis 922 and the surface of the unrecessed portions 928 is less than the radius 934 of the electrode core body 906. Additionally, the tapered shape means that radial distance from the centerline axis to the surface of the unrecessed portions decreases along the length of the electrode core tip 920 such that the radial distance is smaller at points closer to the end surface 924 than at points further from the end surface 924. For example, the radial distance 932A is smaller than the radial distance 932B.

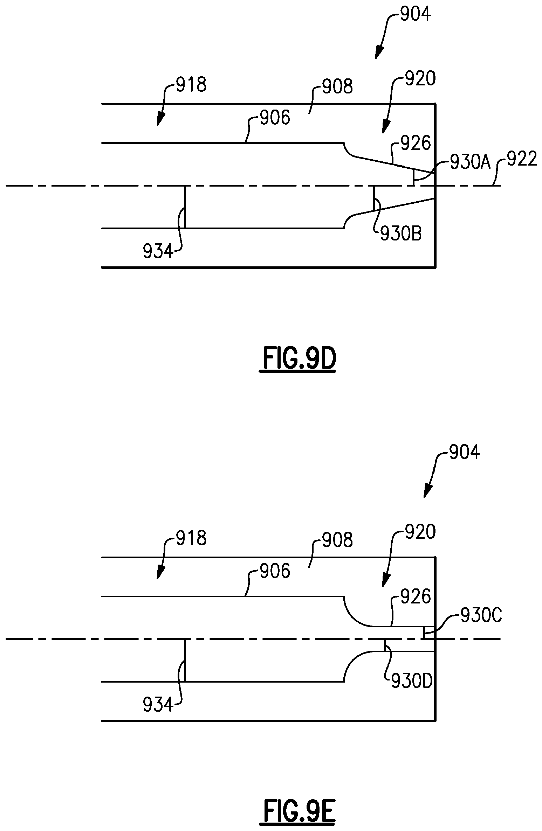

In some embodiments, the recessed portions can also be tapered. In these embodiments, the radial distance between the centerline axis and the surface of the recessed portions varies along the length of the electrode core tip. Figure 9D is a cross-sectional view of the electrode 904 taken along line D-D showing the tapered electrode recessed portions 926. The radial distance between a point on the centerline axis 922 and the surface of the recessed portions 926 decreases along the length of the electrode core tip 920 such that the radial distance is smaller at points closer to the end surface 924 than at points further from the end surface 924. For example, the radial distance 930A is smaller than the radial distance 930B. In other embodiments, however, the recessed portions 926 are not tapered. In these embodiments, the radial distance between the centerline axis 922 and the surface of the recessed portions 926 remains constant along the length of the electrode core tip (except for the transition section of the recessed portions 926, if present). Figure 9E is an alternative cross-sectional view of the electrode 904 taken along line D-D showing the untapered recessed portions 926. In the embodiment shown in Figure 9E, the radial distance between the centerline axis 922 and the surface of the recessed portions 926 remains constant along the length of the electrode core tip 920. For example, the radial distances 930C and 930D are approximately the same size.

In the cross-sectional views shown in Figures 4C and 9C-9E, the outer surface of the coatings (e.g., coatings 408 and 908) is depicted as not substantially varying along the length of the electrode. For example, a radial distance between the centerline axis and the outer surface of the coating is substantially the same along the length of the electrode. In these embodiments, the shape of the outer surface of the coating can be generally unaffected by the shape and profile of the underlying electrode core around which the coating is formed. In other embodiments, the shape of the outer surface of the coating can depend on the shape of the underlying electrode core. For example, in embodiments where the electrode core tip tapers along its the length, the portion of the coating surrounding the tapering electrode core tip may also taper along its length. Similarly, in embodiments where the electrode core tip comprises recessed portions, the portions of the outer surface of the coating formed over the recessed portions can also have recessions or divots formed thereon.

### Experimental Results

Experiments have shown that electrodes having electrode core tips with recessed portions are more durable than electrodes having tapered electrode core tips. Table 1 illustrates an experimental comparison of the amount of force required for the coating at the tip of the electrode to break. The coating breaking force was tested for three different electrodes: an electrode similar to the electrode 306 shown in Figure 3 and having a tapered tip (without recessed portions), an electrode similar to the electrode 506 shown in Figures 5A and 5B that has four recessed portions 526, and an electrode similar to the electrode shown in Figures 5A and 5B that has two recessed portions 526. Each of the tested electrodes had a diameter of 5/32 of an inch.

**TABLE 1**

| **Electrode Core Tip** | **Average Force Required to Break Coating (lbf)** |
|---|---|
| Tapered (no recessed portions) | 11.7 |
| Two recessed portions | 17.88 |
| Four recessed portions | 22.14 |

The amount of force required to break the coating surrounding the electrode core tip is significantly higher for the electrodes having the recessed portions than the tapered tip electrode. In fact, the coating breaking force for the electrode having an electrode core tip with four recessed portions was almost twice that of the coating breaking force for the electrode with the tapered tip electrode.

Additional experiments were conducted to demonstrate the improved coating durability for electrodes having electrode core tips with recessed portions over electrodes having tapered electrode core tips (without recessed portions). Table 2 illustrates an experimental comparison of the average number of impacts required to break the coating formed over various electrode core tips. In this experiment, a rod is raised to a set height over the tip of the electrode and then dropped onto the stationary electrode. This process is repeated until the coating formed over the electrode core tip breaks off. The average number of impacts required to break the coating was tested for three different electrodes: an electrode similar to the electrode 306 shown in Figure 3 and having a tapered tip (without recessed portions), an electrode similar to the electrode 506 shown in Figures 5A and 5B that has four recessed portions 526, and an electrode similar to the electrode shown in Figures 5A and 5B that has two recessed portions 526. Each of the tested electrodes had a diameter of 5/32 of an inch.

**TABLE 2**

| **Electrode Core Tip** | **Average Number of Impacts Required to Break Coating** |
|---|---|
| Tapered (no recessed portions) | 1.4 |
| Two recessed portions | 3.6 |
| Four recessed portions | 4.2 |

The average number of impacts required to break the coating off of the electrode core tips was significantly higher for electrodes having the electrode core tips with recessed portions than the electrode having the tapered electrode core tip (without the recessed portions). This indicates that the coating surrounding the electrode core tips having recessed portions is more durable than the coating surrounding the tapered electrode core tips without recessed portions because they can withstand more impacts (e.g., that occur during shipping and handling of the electrode) without any of the coating chipping off. This indicates that the electrodes having electrode core tips with recessed portions will, on average, have more coating adhered to the electrode core tips during arc-start than electrodes having tapered electrode core tips without recessed portions. Given that the amount of the coating effects the quality of the weld metal, the weld metal formed during arc-start from electrodes having electrode core tips with recessed portions is expected to be higher quality than the weld metal formed during arc-start from electrodes having tapered electrode core tips (without recessed portions).

To verify this expectation, weld metal formed from an electrode having an electrode core tip with recessed portions was compared to weld metal formed from an electrode having a tapered electrode core tip (without recessed portions). As previously discussed, weld metal having high porosity is considered to be low quality and it can be challenging to achieve low porosity weld metal during arc-start processes. Accordingly, to demonstrate that electrodes having electrode core tips with recessed portions have superior arc-start characteristics to electrodes with tapered electrode cores, weld metal was put down using the different electrodes and the starting porosity (i.e., the porosity of the portion of the weld metal formed from the electrode core tip) was measured. These tests were performed several times using different welding currents (170A, 210A, and 250A). Table 3 illustrates the starting porosity of weld metal formed from an electrode having an electrode core tip with two recessed portions and from an electrode having a tapered electrode core tip.

**TABLE 3**

| **Current (A)** | **Starting Porosity (%)** | |
|---|---|---|
| | **Tapered (no recessed portions)** | **Two recessed portions** |
| **170** | 20 | 11 |
| **210** | 12 | 10 |
| **250** | 5 | 3 |

The starting porosity of the weld metal formed from the electrode having an electrode core tip with the recessed portions was significantly less than the starting porosity of the weld metal formed from the electrode having the tapered electrode core (without recessed portions). This shows that the weld metal formed from the electrode core tip with recessed portions is less porous, and therefore higher quality, than weld metal formed from the tapered electrode core tip.

### Additional Examples

1. A welding electrode, comprising:
   an electrode core having a centerline axis that extends along a length of the electrode core, wherein the electrode core comprises:
      an electrode core body, wherein the electrode core body has a circular cross-section having a radius; and
      an electrode core tip, wherein:
         the electrode core tip has two or more recessed portions and two or more unrecessed portions,
         the two or more recessed portions extend along a length of the electrode core tip, and
         a radial distance between the centerline axis and a surface of one of the recessed portions is less than a length of the radius; and
   a coating formed around the electrode core, wherein the coating comprises a flux material.
2. The welding electrode of any of the embodiments disclosed herein, or of any of the claims or of any of the examples, or of example 1, wherein the welding electrode is a stick electrode adapted for shielded metal arc welding.
3. The welding electrode of example 1, or an electrode of any of the embodiments disclosed herein, or of any of the claims or of any of the examples, wherein the radial distance comprises a first radial distance and wherein a second radial distance between the centerline axis and a surface of one of the unrecessed portions is greater than the first radial distance.
4. The welding electrode of example 3, or an electrode of any of the embodiments disclosed herein, or of any of the claims or of any of the examples, wherein the second radial distance is substantially the same as the radius.
5. The welding electrode of example 1, or an electrode of any of the embodiments disclosed herein, or of any of the claims or of any of the examples, wherein each of the two or more recessed portions is separated from an adjacent recessed portion by one of the unrecessed portions,
6. The welding electrode of example 1, or an electrode of any of the embodiments disclosed herein, or of any of the claims or of any of the examples, wherein the electrode core tip is tapered along the length thereof.
7. The welding electrode of example 1, or an electrode of any of the embodiments disclosed herein, or of any of the claims or of any of the examples, wherein each of the two or more recessed portions defines a cavity and wherein the coating at least partially fills the cavities.
8. The welding electrode of example 1, or an electrode of any of the embodiments disclosed herein, or of any of the claims or of any of the examples, wherein a cross-sectional perimeter of the electrode core tip is between 80% and 120% of a circumference of the circular cross-section of the electrode core body.
9. The welding electrode of example 1, or an electrode of any of the embodiments disclosed herein, or of any of the claims or of any of the examples, wherein the electrode core tip has a length of 3cm or less (such as 1 inch or less).
10. A welding electrode for shielded metal arc welding, comprising:
   an electrode core having a centerline axis that extends along a length of the electrode core, wherein the electrode core comprises:
      an electrode core body, and
      an electrode core tip, comprising:
         first and second recessed portions; and
         an unrecessed portion between the first and second recessed portions, wherein a first radial distance from a point on the centerline axis to a surface of the unrecessed portions is greater than a second radial distance from the point on the centerline axis to a surface of the first recessed portion; and
   a coating formed around the electrode core, wherein the coating comprises a flux material.
11. The welding electrode of example 10, or an electrode of any of the embodiments disclosed herein, or of any of the claims or of any of the examples, wherein the electrode core body has a circular cross-section having a radius.
12. The welding electrode of example 11, or an electrode of any of the embodiments disclosed herein, or of any of the claims or of any of the examples, wherein the first radial distance is less than a length of the radius.
13. The welding electrode of example 11, or an electrode of any of the embodiments disclosed herein, or of any of the claims or of any of the examples, wherein the first radial distance is equal to a length of the radius.
14. The welding electrode of example 10, or an electrode of any of the embodiments disclosed herein, or of any of the claims or of any of the examples, wherein the electrode core tip is tapered along a length thereof.
15. The welding electrode of example 10, or an electrode of any of the embodiments disclosed herein, or of any of the claims or of any of the examples, wherein the first recessed portion defines a cavity and wherein the coating at least partially fills the cavity.
16. A consumable welding electrode, comprising:
   an electrode core body having opposing first and second ends;
   an electrode core tip at the first end, wherein the electrode core tip comprises a plurality of recessed portions extending along a length of the electrode core tip; and
   a coating formed around the electrode core and electrode core tip, wherein the coating comprises a flux material and wherein the coating at least partially fills cavities defined by each of the plurality of recessed portions.
17. The consumable welding electrode of example 16, or an electrode of any of the embodiments disclosed herein, or of any of the claims or of any of the examples, wherein the consumable welding electrode comprises a centerline axis and wherein the plurality of recessed portions do not intersect with the centerline axis.
18. The consumable welding electrode of example 16, or an electrode of any of the embodiments disclosed herein, or of any of the claims or of any of the examples, wherein the electrode core body has a circular cross-section and wherein a perimeter of the electrode core tip is within 20% of a circumference of the circular cross-section.
19. The consumable welding electrode of example 16, or an electrode of any of the embodiments disclosed herein, or of any of the claims or of any of the examples, wherein the electrode core tip has a length of 24 inches or less.
20. The consumable welding electrode of example 16, or an electrode of any of the embodiments disclosed herein, or of any of the claims or of any of the examples, wherein the electrode core tip is tapered along its length.
21. The consumable welding electrode of example 16, or an electrode of any of the embodiments disclosed herein, or of any of the claims or of any of the examples, wherein the electrode core tip comprises at least three recessed portions.

Unless the context clearly requires otherwise, throughout the description and the claims, the words "comprise," "comprising," "include," "including" and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Likewise, the word "connected", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number, respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or whether these features, elements and/or states are included or are to be performed in any particular embodiment.

While certain embodiments have been described, these embodiments have been presented by way of example only, and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the spirit of the disclosure. For example, while blocks are presented in a given arrangement, alternative embodiments may perform similar functionalities with different components and/or circuit topologies, and some blocks may be deleted, moved, added, subdivided, combined, and/or modified. Each of these blocks may be implemented in a variety of different ways. Any suitable combination of the elements and acts of the various embodiments described above can be combined to provide further embodiments. The various features and processes described above may be implemented independently of one another, or may be combined in various ways. All possible combinations and subcombinations of features of this disclosure are intended to fall within the scope of this disclosure.

## Claims

1. A welding electrode, comprising:
an electrode core having a centerline axis that extends along a length of the electrode core, wherein the electrode core comprises:
an electrode core body, wherein the electrode core body has a circular cross-section having a radius; and
an electrode core tip, wherein:
the electrode core tip has two or more recessed portions and two or more unrecessed portions,
the two or more recessed portions extend along a length of the electrode core tip, and
a radial distance between the centerline axis and a surface of one of the recessed portions is less than a length of the radius; and
a coating formed around the electrode core, wherein the coating comprises a flux material.

2. The welding electrode of claim 1, wherein the welding electrode is a stick electrode adapted for shielded metal arc welding.

3. The welding electrode of claim 1 or 2, wherein the radial distance comprises a first radial distance and wherein a second radial distance between the centerline axis and a surface of one of the unrecessed portions is greater than the first radial distance, wherein preferably the second radial distance is substantially the same as the radius.

4. The welding electrode of any of the previous claims, wherein each of the two or more recessed portions is separated from an adjacent recessed portion by one of the unrecessed portions, or wherein each of the two or more recessed portions defines a cavity and wherein the coating at least partially fills the cavities.

5. The welding electrode of any of the previous claims, wherein the electrode core tip is tapered along the length thereof.

6. The welding electrode of any of the previous claims, wherein a cross-sectional perimeter of the electrode core tip is between 80% and 120% of a circumference of the circular cross-section of the electrode core body.

7. The welding electrode of any of the previous claims, wherein the electrode core tip has a length of 3cm or less (such as 1 inch or less).

8. A welding electrode for shielded metal arc welding, comprising:
an electrode core having a centerline axis that extends along a length of the electrode core, wherein the electrode core comprises:
an electrode core body, and
an electrode core tip, comprising:
first and second recessed portions, and
an unrecessed portion between the first and second recessed portions, wherein a first radial distance from a point on the centerline axis to a surface of the unrecessed portions is greater than a second radial distance from the point on the centerline axis to a surface of the first recessed portion; and
a coating formed around the electrode core, wherein the coating comprises a flux material.

9. The welding electrode of claim 8, wherein the electrode core body has a circular cross-section having a radius, wherein the first radial distance is less than or equal to the radius.

10. The welding electrode of claim 8 or 9, wherein the electrode core tip is tapered along a length thereof.

11. The welding electrode of claim 8, 9, or 10, wherein the first recessed portion defines a cavity and wherein the coating at least partially fills the cavity.

12. A consumable welding electrode, comprising:
an electrode core body having opposing first and second ends;
an electrode core tip at the first end, wherein the electrode core tip comprises a plurality of recessed portions extending along a length of the electrode core tip; and
a coating formed around the electrode core body and the electrode core tip, wherein the coating comprises a flux material and wherein the coating at least partially fills cavities defined by each of the plurality of recessed portions.

13. The consumable welding electrode of claim 12, wherein the consumable welding electrode comprises a centerline axis and wherein the plurality of recessed portions do not intersect with the centerline axis.

14. The consumable welding electrode of claim 12 or 13, wherein the electrode core body has a circular cross-section and wherein a perimeter of the electrode core tip is within 20% of a circumference of the circular cross-section.

15. The consumable welding electrode of claim 12, 13 or 14, wherein the electrode core tip has a length of 24 inches or less, or wherein the electrode core tip is tapered along its length, or wherein the electrode core tip comprises at least three recessed portions.
